# EUROPEAN PATENT APPLICATION

(11) **EP 4 116 583 A1**
(43) Date of publication of application: **11.01.2023**
(21) Application number: 21183738.0
(22) Date of filing: 05.07.2021
(51) Int. Cl.: F03D 80/60, H02K 1/20, H02K 9/02, H02K 9/04

(54) **WIND TURBINE GENERATOR COMPRISING A COOLING CIRCUIT**

(71) Applicant: Siemens Gamesa Renewable Energy A/S, 7330 Brande (DK)
(72) Inventor: Booth, James Kenneth, 7330 Brande (DK); Jensen, Simon Vyff, 7160 Tørring (DK)
(74) Representative: SGRE-Association

(57) **Abstract**

A wind turbine (1) comprises an electric generator (5) with a cooling circuit. The cooling circuit is configured to guide through a cooling air from the outer atmosphere towards a third passage (16) via a first inlet (101), a first passage (13), a second passage (14), an airgap (15) and airducts (120), and then from the third passage (16) back towards the outer atmosphere. Thereby, the need for crossing the air from the rear end of a nacelle to a drive-end side of the generator is eliminated, which simplifies the design of the generator.

## Description

### Field of invention

The present invention relates to a wind turbine comprising a cooling circuit.

EP 2 615 299 A1 describes a tower head of a wind turbine, which has a generator driven through the rotor of the wind turbine without interposing a transmission, and units for directing a cooling medium flow which extracts waste heat from the generator. A stator packet of the generator has one or more passages guiding the cooling medium flow through the stator packet. As a passage, a slot extends through the stator packet in the circumferential direction and radially to the rotational axis of the rotor and opens into an air gap between the stator packet and the rotor.

Generators which are cooled by means of direct cooling have a rather complex flow of air. Cold air is transported from the rear end of the nacelle to the drive-end (DE) and non-drive-end (NDE) sides of the generators. From there, the air is forced past the coil windings, magnets and through the lamination of the stator ending inside the stator cavity. From this cavity, the hot air must first be transported out of the generator and then out of the rear end where possible. The hot and cold air may not be mixed. This complex route of air flow utilizes a lot of space and is costly.

The transport of the cold air to the DE-side of the generator is usually done by large tubes inside of the generator, splitting the generator into cavities or adding features and holes in a fixed shaft, which would allow the cold air to be not mixed with hot air.

### Summary of the Invention

There may be a need for a wind turbine, where a cooling circuit without any complex design can transport cold air from a rear end of a nacelle to a drive-end side of the generator. This need may be met by the subject matter according to the independent claim. The present invention is further developed as set forth in the dependent claims.

According to the invention, a wind turbine comprises an electric generator having a stator and a rotor, wherein the rotor s rotatable relative to the stator about a rotation axis extending between a drive end and a non-drive end of the generator. The wind turbine further comprises a hollow, fixed shaft, to which the stator is stationarily mounted, the fixed shaft comprising a first inlet; a bearing, by which the rotor is rotatable supported on the fixed shaft; a hub which is connected to the rotor; and a cooling circuit for cooling the electric generator. The cooling circuit comprises a first passage extending through the hollow, fixed shaft and being in a fluid-connection to an outer atmosphere via the first inlet; a second passage extending through or at the hub and being in a fluid-connection to the first passage; an airgap radially arranged between the rotor and the stator and being in a fluid-connection to the second passage; airducts arranged in the stator and being in a fluid-connection to the airgap; and a third passage radially arranged between the stator and the fixed shaft and being in a fluid-connection to the airducts. The cooling circuit is configured to guide through a cooling air from the outer atmosphere towards the third passage via the first inlet, the first passage, the second passage, the airgap and the airducts, and then from the third passage back towards the outer atmosphere.

The second passage extends from the hub to the DE-side of the generator so that cold air will can be forced directly into the DE-side of generator. Thereby, the need for crossing the air from the rear end of the nacelle to the DE-side of the generator is eliminated, which simplifies the design of the generator.

In an embodiment, the wind turbine further comprises a fan arranged downstream to the third passage and being in a fluid-connection to the third passage; and a fourth passage arranged downstream to fan and being in a fluid-connection to the fan and the outer atmosphere. The cooling circuit is configured to guide through the cooling air from the third passage towards the outer atmosphere via the fan and the fourth passage. The fan can be installed inside the stator.

In an embodiment, the hub comprises a casted part which integrally comprises the second passage. The second passage can be easily integrated in the hub during the casting process.

In another embodiment, the hub comprises an integral inner tube or space being in a fluid-connection to the first passage. A separate outer space is arranged at the hub downstream the integral inner tube, and the outer space is in a fluid-connection to the integral inner space and to the airgap, wherein the integral inner space and the separate outer space form the second passage. In such an embodiment, the second passage is not necessarily to be fully integrated in the hub so that the structural integrity and solidity of the hub is not impaired. The integral inner space can be aligned to the rotational axis of the generator. The outer space can be made of a (thin) metal sheet or of plastic.

In an embodiment, the wind turbine further comprises a second inlet provided in a back plate of the rotor at the non-drive end of the generator, wherein the second inlet is configured to introduce cooling air from the outer atmosphere towards the airgap.

In an embodiment, the wind turbine further comprises a single filter arranged upstream of the first inlet and/or the second inlet. If the filter covers both the first inlet and the second inlet, the design is further simplified.

In an embodiment, the wind turbine further comprises an intermediate filter arranged at a front plate of the rotor and between the second passage and the airgap.

Advantageously, the present invention does not require that the cold air must be transported from the rear end of the nacelle to the DE-side of generator, thus cold air and hot air do not cross each other and the cooling effect is improved. In addition, the complexity of the design of the generator is reduced.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a longitudinal section of a generator for a wind turbine according to an embodiment; and
- Fig. 3: shows a longitudinal section of a generator for a wind turbine according to another embodiment.

### Detailed Description

The illustrations in the drawings are schematically. It is noted that in different figures, similar or identical elements are provided with the same reference signs.

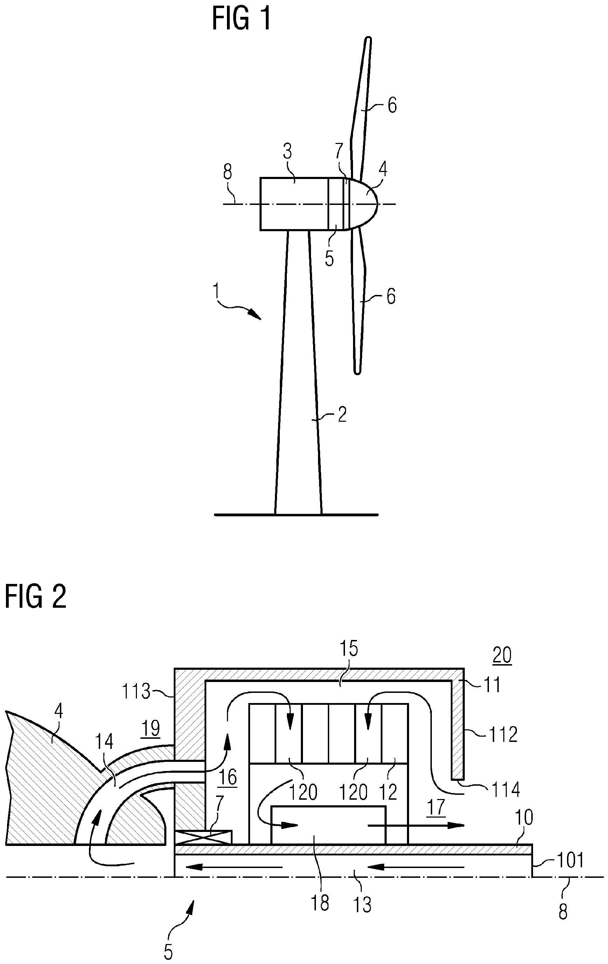

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gear-less, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

**Fig. 2** shows a longitudinal section of a generator 5 for a wind turbine 1 according to an embodiment. The electric generator 5 has a stator 12 and a rotor 11. The rotor 11 is rotatable relative to the stator 12 about the rotation axis 8 which extends between a drive end 19 and a non-drive end 20 of the generator 5. The generator 5 has a hollow, fixed shaft 10, to which the stator 12 is stationarily mounted. The fixed shaft 10 comprising a first inlet 101. The generator 5 has a bearing 7, by which the rotor 11 is rotatable supported on the fixed shaft 10. The generator 5 further has a hub 4 which is connected to the rotor 11.

A cooling circuit for cooling the electric generator 5 is provided. The cooling circuit comprises a first passage 13 extending through the hollow, fixed shaft 10 and being in a fluid-connection to an outer atmosphere via the first inlet 101; a second passage 14 extending through or at the hub 4 and being in a fluid-connection to the first passage 13; an airgap 15 radially arranged between the rotor 11 and the stator 12 and being in a fluid-connection to the second passage 14; airducts 120 arranged in the stator 12 and being in a fluid-connection to the airgap 15; and a third passage 16 radially arranged between the stator 12 and the fixed shaft 10 and being in a fluid-connection to the airducts 120.

The cooling circuit is configured to guide through a cooling air from the outer atmosphere towards the third passage 16 via the first inlet 101, the first passage 13, the second passage 14, the airgap 15 and the airducts 120, and then from the third passage 16 back towards the outer atmosphere, for example through an opening in a back plate 112 of the rotor 11 at the non-drive end 20 of the generator 5.

A fan 18 is arranged downstream to the third passage 16 and in a fluid-connection to the third passage 16. A fourth passage 17 is arranged downstream to fan 18 and in a fluid-connection to the fan 18 and the outer atmosphere. The cooling circuit is configured to guide through the cooling air from the third passage 16 towards the outer atmosphere via the fan 18 and the fourth passage 17. The fourth passage 17 can comprise the above-mentioned opening in the back plate 112 of the rotor 11.

In the embodiment of Fig. 2, the hub 4 comprises a casted part which integrally comprises the second passage 14.

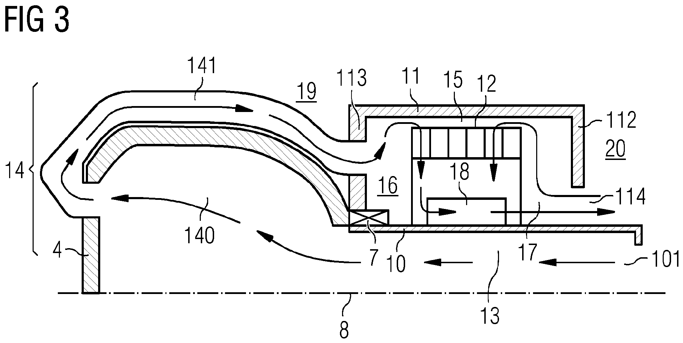

**Fig. 3** shows a longitudinal section of a generator 5 for a wind turbine 1 according to another embodiment. The hub 4 comprises an integral inner tube or inner space 140 being in a fluid-connection to the first passage 13, wherein a separate outer tube or separate outer space 141 is arranged at the hub 4 downstream the integral inner space 140, wherein the outer space 141 is in a fluid-connection to the integral inner space 140, to the third passage 16 and to the airgap 15. In such an embodiment, the integral inner space 140 and the separate outer space 141 form the second passage 14. In such an embodiment, the second passage 14 is not fully integrated in the hub 4 so that the structural integrity and solidity of the hub 4 is not impaired. The integral inner space 140 and/or the separate outer space 141 can be aligned to the rotational axis 8 of the generator 5. The outer space 141 can be made of a (thin) metal sheet or of plastic.

In the embodiments of Figures 2 and 3, a second inlet 114 is provided in the back plate 112 of the rotor 11 at the non-drive end 20 of the generator 5, wherein the second inlet 114 is configured to introduce cooling air from the outer atmosphere towards the airgap 15. The second inlet 114 and the above-mentioned opening in the back plate 112 of the rotor 11 for discharging the hot air can be separated from each other by a portion of the back plate 112.

The wind turbine 1 can further comprise a single filter arranged upstream of the first inlet 101 and/or the second inlet 114, and the wind turbine 1 can further comprise an intermediate filter arranged at a front plate 113 of the rotor 11 and between the second passage 14 and the airgap 15.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A wind turbine (1) comprising:
an electric generator (5) having a stator (12) and a rotor (11), the rotor (11) being rotatable relative to the stator (12) about a rotation axis (8) extending between a drive end (19) and a non-drive end (20) of the generator (5);
a hollow, fixed shaft (10), to which the stator (12) is stationarily mounted, the fixed shaft (10) comprising a first inlet (101);
a bearing (7), by which the rotor (11) is rotatable supported on the fixed shaft (10);
a hub (4) which is connected to the rotor (11); and
a cooling circuit for cooling the electric generator (5) ;
wherein the cooling circuit comprises:
a first passage (13) extending through the hollow, fixed shaft (10) and being in a fluid-connection to an outer atmosphere via the first inlet (101);
a second passage (14) extending through or at the hub (4) and being in a fluid-connection to the first passage (13);
an airgap (15) radially arranged between the rotor (11) and the stator (12) and being in a fluid-connection to the second passage (14);
airducts (120) arranged in the stator (12) and being in a fluid-connection to the airgap (15); and
a third passage (16) radially arranged between the stator (12) and the fixed shaft (10) and being in a fluid-connection to the airducts (120);
wherein the cooling circuit is configured to guide through a cooling air from the outer atmosphere towards the third passage (16) via the first inlet (101), the first passage (13), the second passage (14), the airgap (15) and the airducts (120), and then from the third passage (16) back towards the outer atmosphere.

2. The wind turbine (1) according to the preceding claim, further comprising:
a fan (18) arranged downstream to the third passage (16) and being in a fluid-connection to the third passage (16); and
a fourth passage (17) arranged downstream to fan (18) and being in a fluid-connection to the fan (18) and the outer atmosphere;
wherein the cooling circuit is configured to guide through the cooling air from the third passage (16) towards the outer atmosphere via the fan (18) and the fourth passage (17) .

3. The wind turbine (1) according to any one of the preceding claims, wherein
the hub (4) comprises a casted part which integrally comprises the second passage (14).

4. The wind turbine (1) according to any one of the preceding claims, wherein
the hub (4) comprises an integral inner tube or integral inner space (140) being in a fluid-connection to the first passage (13);
wherein a separate outer tube or separate outer space (141) is arranged at the hub (4) downstream the integral inner space (140), the outer space (141) being in a fluid-connection to the integral inner space (140) and to the airgap (15);
wherein the integral inner space (140) and the separate outer space (141) form the second passage (14).

5. The wind turbine (1) according to any one of the preceding claims, further comprising:
a second inlet (114) provided in a back plate (112) of the rotor (11) at the non-drive end (20) of the generator (5), wherein the second inlet (114) is configured to introduce cooling air from the outer atmosphere towards the airgap (15) .

6. The wind turbine (1) according to any one of the preceding claims, further comprising:
a single filter arranged upstream of the first inlet (101) and/or the second inlet (114).

7. The wind turbine (1) according to any one of the preceding claims, further comprising:
an intermediate filter arranged at a front plate (113) of the rotor (11) and between the second passage (14) and the airgap (15).
